(19) Europäisches Patentamt
European Patent Office
Office européen des brevets

(11) **EP 1 617 203 B1**

(12) **EUROPEAN PATENT SPECIFICATION**

(45) Date of publication and mention
of the grant of the patent:
**29.04.2009 Bulletin 2009/18**

(51) Int Cl.:
***G01N 21/55*** (2006.01)

(21) Application number: **04724129.4**

(22) Date of filing: **29.03.2004**

(86) International application number:
**PCT/JP2004/004428**

(87) International publication number:
**WO 2004/095006 (04.11.2004 Gazette 2004/45)**

(54) **DIFFERENTIAL SURFACE PLASMON RESONANCE MEASURING DEVICE AND ITS MEASURING METHOD**

VORRICHTUNG ZUR DIFFERENZIELLEN OBERFLÄCHENPLASMONENRESONANZMESSUNG UND MESSVERFAHREN

DISPOSITIF DE MESURE DE RESONANCE PLASMONIQUE DE SURFACE DIFFERENTIELLE ET PROCEDE DE MESURE CORRESPONDANT

(84) Designated Contracting States:
**DE GB SE**

(30) Priority: **23.04.2003 JP 2003118565**
**05.02.2004 JP 2004029060**

(43) Date of publication of application:
**18.01.2006 Bulletin 2006/03**

(73) Proprietor: **Japan Science and Technology Agency**
**Kawaguchi-shi,**
**Saitama 332-0012 (JP)**

(72) Inventors:
• **IMATO, Toshihiko**
**Fukuoka-shi,**
**Fukuoka 814-0031 (JP)**

• **ASANO, Yasukazu**
**Sayama-shi,**
**Saitama 350-1302 (JP)**

(74) Representative: **Hoarton, Lloyd Douglas Charles**
**Forrester & Boehmert**
**Pettenkoferstrasse 20-22**
**80336 Munich (DE)**

(56) References cited:
WO-A-01/86262          DE-C1- 19 814 811
JP-A- 7 159 319        JP-A- 7 159 319
JP-A- 9 096 605        JP-A- 9 257 701
JP-A- 9 257 701        JP-A- 9 292 333
JP-A- 2001 511 249     JP-A- 2002 214 131
JP-A- 2002 214 133     JP-A- 2002 214 134
JP-A- 2003 202 289     US-A- 4 889 427
US-A- 5 917 607

**Description**

Technical Field

The present invention relates to a differential surface plasmon resonance measuring apparatus and a method for differentially measuring surface plasmon resonance.

Background Art

While the industry highly developed in the latter half of the 20 century in Japan brought material wealth to our life, it has left negative legacies that have a serious impact on human society, such as air, water, and soil pollution and juvenile drug abuse. Among these problems, air and water pollution caused by inorganic materials have fairly overcome. However, endocrine disrupters as represented by for, example, dioxin, whose effects on living bodies were found in the early 1990s, are of concern. Specifically, solutions for environmental pollution with some artificial low-molecular-weight organic compounds, physical and mental decay by drug abuse, and soil pollution are left to the 21 century, and they are considered to be public concerns that should be overcome immediately. In view of metrological chemistry, analysis of those organic compounds, which are minor constituents and need measuring with reliability, is performed by gas chromatography and mass spectroscopy, which are expensive analysis and require a lot of skill for operation. Accordingly, information sufficient to know the actual conditions of such pollution cannot be obtained. This is one of the causes of difficulty in solving the problems.

In addition to the above-mentioned gas chromatography and mass spectroscopy, general approaches for analyzing organic compounds include liquid chromatography, optical measurements based on chemical reactions using fluorescence reagents or illuminant reagents, enzyme immunoassay, and a surface plasmon resonance measurement. Among these, simple is the surface plasmon resonance measurement. The reasons are as follows.

In the surface plasmon resonance measurement, optical resonance (surface plasmon resonance, SPR) is measured which is generated in the region of 100 nm by an interaction between materials induced by irradiating a metal surface in a plasma state. This measurement has the following advantages:

(1) Chemical reactions at the surface of a sensor can be tracked in real time;
(2) Since the interaction between materials occurs in the region of 100 nm, samples to be analyzed can be in small amount;
(3) Even a small amount of sample can be concentrated with a high sensitivity because of the above (2);
(4) The detecting system uses a glass prism, and accordingly the detector can be extremely small; and
(5) A gold membrane is used to generate plasmon resonance, and consequently, it becomes easy to fix inductors, such as antibodies, and a detecting system selectively detecting a measuring object can be designed.

Accordingly, the surface plasmon resonance measurement is thought of as an optimal approach for developing a ubiquitous palm-size-oriented field apparatus for measuring a low-molecular-weight environmental organic pollutant.

Surface plasmon resonance is a phenomenon in which when light enters a prism that is coated with a metal thin film by vapor deposition, evanescent waves always generated at the surface of the prism resonate with surface plasmon waves excited at a gold surface, thereby reducing reflection. The incident angle inducing the surface plasmon resonance depends on the permittivity of the sample solution. By fixing a material interactive with the measuring object to the surface of a metal thin film to form a functional film, a chemical sensor measuring a variety of organic compounds can be achieved.

This phenomenon has been known in the field of optics in applied physics since a long time ago. More specifically, Wood found the phenomenon in 1902 and Nylander developed a sensor using the phenomenon in 1982. Scientific applications of the phenomenon have not been made until recently, and real-time measurement of interaction between a biomembrane and a material was made possible by fixing an antibody or the like to a gold surface. In general, in order to measure the interaction between the biomembrane and the material, an equilibrium method is performed in which their equilibrium state is measured over a period of several days. The surface plasmon resonance measurement allows real-time measurement of the equilibrium state, and accordingly, its various applications, such as immunosensors measuring immune response and protein interaction analysis, have been made widely in the fields of science and industry, such as analytical chemistry, biochemistry, drug chemistry, and medical measurement.

The principle of surface plasmon resonance will now be described.

If light is emitted to a glass substrate whose one surface is coated with a metal thin layer deposited at a thickness of several tens nanometers, such as of gold or silver, from the other surface side, wave propagation called surface plasmon occurs. The surface plasmon results from quantization of fluctuations of free electrons less constrained in the metal. Free electrons can propagate with a crude density equal to that of sound waves in the direction of the tangent at the metal surface. If free electrons are vibrated with electromagnetic waves having the same propagation speed, the electrons resonate and thus surface plasmon occurs.

Since in a metal, electrons move freely around the cations, the metal can be considered to be solid-state plasma. The solid-state plasma has surface plasma oscillations (their quantum refers to surface plasmon), which result from collective electron excitation, in the vicinity of its surface. The surface plasmon is surface waves present only at a metal surface, and the relationship between its wave number $K_{sp}$ and frequency $\omega$ is given as follows, depending not only on the permittivity $\varepsilon_m$ of the metal, but also on the refractive index $n_s$ of the medium (sample) in contact with the metal:

$$Ksp = \frac{c}{\omega} \sqrt{\frac{\varepsilon_m n_s^2}{\varepsilon_m + n_s^2}} \qquad\qquad (1),$$

where c represents the velocity of light in a vacuum.

If the wave number $K_{sp}$ of the surface plasmon with a frequency $\omega$ at the surface of the metal (whose permittivity $\varepsilon_m$ has been known) is obtained, the refractive index $n_s$ of the sample can be determined from equation (1).

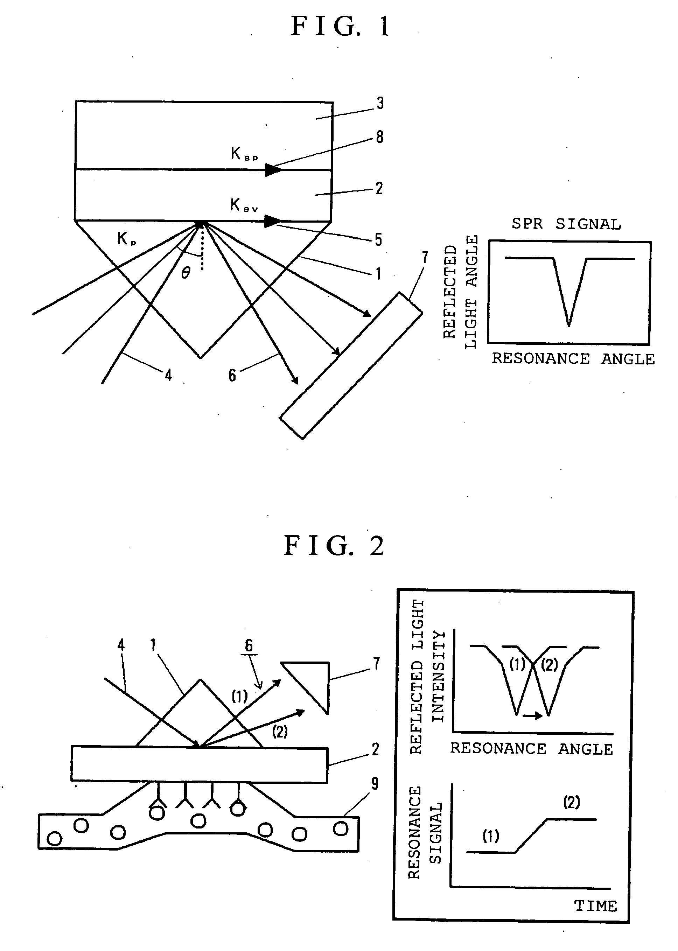

Fig. 1 is a schematic representation of the principle of surface plasmon resonance.

In this figure, reference numeral 1 represents a prism (refractive index $n_D$), 2 represents a metal thin film (permittivity $\varepsilon$), 3 represents a sample solution, 4 represents an incident light (wave number $K_p$), 5 represents evanescent waves (wave number $K_{ev}$), 6 represents reflected light, 7 represents a CCD detector, and 8 represents surface plasmon (wave number $K_{sp}$).

As shown in Fig. 1, the metal thin film 2 is deposited on the surface of the prism 1 and brought into contact with the sample (in this case, sample solution) 3. When incident light 4 comes to the bottom (sensor surface) of the prism 1 at an angle of the critical angle or more from the prism 1 side, the evanescent waves 5 penetrate the sample 3. If plane waves (wave number $K_p$) acting as incident light 4 enter at an incident angle $\theta$, the wave number $K_{ev}$ of the evanescent waves 5 becomes a component of the spatial frequency of the incident light 4 along the bottom of the prism:

$$K_{ev} = K_p \sin \theta \qquad\qquad (2)$$

When the incident angle is the critical angle or more, the relationship $K_p \sin \theta > K_s$ holds ($K_s$ represents the wave number of light propagating through the sample 3). Hence,

$$K_{ev} = K_p \sin \theta > K_S \qquad\qquad (3)$$

The wave number $K_{ev}$ of the evanescent waves 5 is larger than the wave number $K_s$ of the light propagating through the sample 3. Therefore an incident angle $\theta_{sp}$ satisfying the relationship $K_{ev} = K_{sp}$ exists. Light 4 entering at this angle $\theta_{sp}$ resonates with the evanescent waves 5 to excite surface plasmon 8. Once the surface plasmon 8 is excited by the evanescent waves 5, part of the energy of the light transfers to the surface plasmon 8 and, thus, the intensity of the reflected light 6 returning into the prism 1 is reduced. By measuring the dependency of the reflectance at the prism 1 side on the wave number $K_{ev}$ of the evanescent waves or on the incident angle of the incoming plane waves, an absorption peak is observed which indicates the excitation of the surface plasmon 8. The wave number $K_{sp}$ of the surface plasmon 8 is derived from the absorption peak position (wave number $K_{ev}$ or incident angle $\theta_{sp}$), and the refractive index $n_s$ of the sample can be obtained from equations (1) and (2). The refractive index $n_s$ of the sample solution 3 depends on the concentration of the sample. Thus, the concentration can be determined by measuring the refractive index.

If a material interactive with the measuring object is fixed to the surface of the metal thin film 2 to form a functional film 9, as shown in Fig. 2, the permittivity and the thickness of the functional film 9 are varied (by various types of reaction and binding) to change the resonance angle. By measuring the changes of this angle in real time, the state, speed, and quantity of various types of reaction and binding, and sample concentration can be known. Incidentally, Fig. 2 shows an immunological measurement using surface plasmon resonance.

A known plasmon resonance measuring apparatus will now be described.

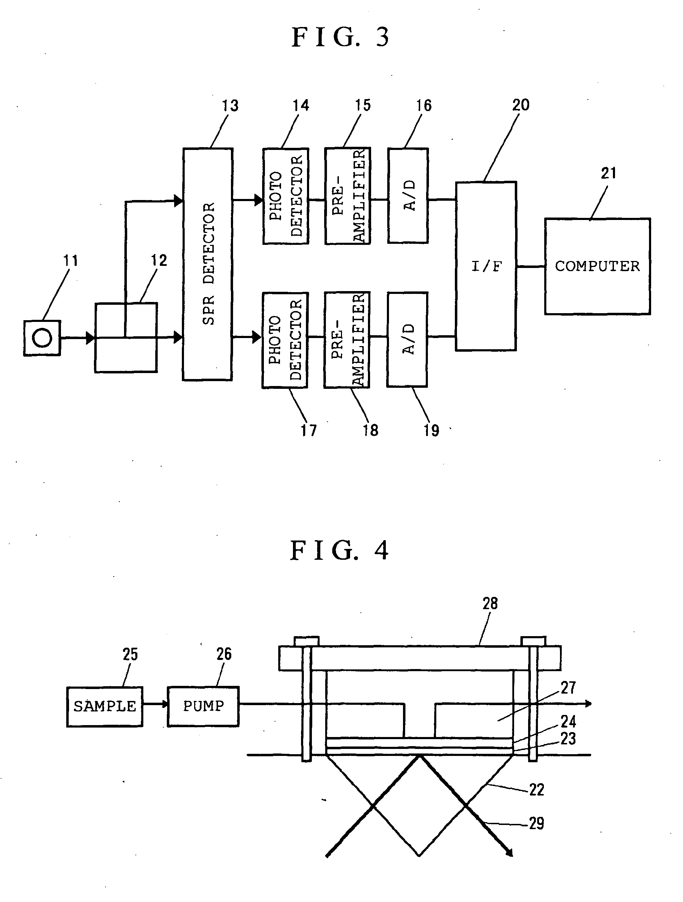

Fig. 3 is a schematic diagram of a differential surface plasmon resonance measuring apparatus.

In this figure, reference numeral 11 represents a light source, 12 represents a beam splitter, 13 represents an SPR detector, 14 represents a sample photodetector, 15 and 18 represent preamplifiers, 16 and 19 represent A/D converters, 17 represents a reference photodetector, 20 represents an interface (I/F), and 21 represents a computer.

As shown in Fig. 3, in a known optical system, light from the light source 11 is split into two paths of light beams by the beam splitter 12, and thus the beams are irradiated to predetermined two points of the SPR detector 13 including a prism. The two independent photodetectors 14 and 17 detect the reductions of the beams resulting from surface plasmon resonance and the preamplifiers 15 and 18 amplify the signals.

Fig. 4 shows a detecting system of the known surface plasmon resonance measuring apparatus.

In this figure, reference numeral 22 represents a prism, 23 represents an optical interface oil layer, 24 represents a sensor, 25 represents a sample, 26 represents a liquid pump, 27 represents a flow cell, 28 represents a flow cell holder, and 29 represents light.

As shown in this figure, the known detector includes the liquid pump 26, the flow cell 27, the cell holder 28, the sensor 24, the prism 22, and the optical interface oil layer 23 for ensuring optical matching with the prism 22.

[Patent Document 1] Japanese Unexamined Patent Application Publication No. 2000-039401

[Patent Document 2] Japanese Unexamined Patent Application Publication No. 2001-183292

[Patent Document 3] Japanese Unexamined Patent Application Publication 2001-255267

[Patent Document 4] Japanese Patent No. 3356212

[Patent Document 5] Japanese Unexamined Patent Application Publication No. 2003-185572

US 5 917 607 (Fig. 1) discloses a surface plasmon sensor for multiple channel analysis comprising a prism (10) on which a metal film (12) is coated. A specimen (11) contacts the metal film. Light from a semiconductor laser array (14) is scanned by means of a rotating mirror 17 to illuminate the surface of the prism at various angles and optical detector (16) detects each light beam which is totally reflected from the boundary surface (10a) of the prism. As the photo detector means 16, a CCD line sensor or the like may be used. Light detecting signals output from the respective light receiving elements of the photo detector means 16 represent the intensities of the light beam 13 reflected at various angles, that is, for various angles of incidence. The reflected beams 13 in Fig. 1 are all incident at the same point on the line CCD and the axial direction of the line CCD 16 is into the plane of Fig. 1. In the embodiment of Fig. 4 of D1 a source 14 in the form of a semiconductor laser array 14, which has a plurality of light emitting parts 14a is used which gives rise on reflection from individual sensing regions 12 to a plurality of reflected beams 13 which are projected by optical system 125-126 onto different positions of the sensor 116. Also in this Fig. 4 embodiment the sensor extends into the plane of the drawing so that sensor 116 is a to dimensional CCD array.

WO-A 0 186 262 (Fig.2) discloses a plasmon resonance sensor comprising a cylindrical lens that is interposed between a laser diode (7) and a prism (1) on which a reflective metal layer (5) with a sensitive coating 6 is deposited for the detection by detector (8) of biochemical, chemical or biological analytes. The device is desirably compact and may comprise a number of measuring cells 18-21 arranged perpendicular to the plane of incidence one behind the other via which light paths 26, 27, 28 and 29 pass. By this compact arrangement a single laser diode 15 can be used with four measurement cells 18, 19, 20 and 21 each measurement point being assigned its own detector 22, 23, 24 and 25, respectively. These detectors in Fig. 2 (plan view) register the light emergence angle and therefore extend like the detector 8 of Fig. 1 (side view) i.e. two dimensional detection is achieved b using a plurality of linear detectors 2, 23, 24,25.

Disclosure of Invention

Unfortunately, the multi-path system as shown in Fig. 3 is limited in downsizing the prism because light is split into two paths of light beams by the beam splitter 12. Also, the multi-path system needs two detecting systems, and accordingly requires some space in the structure. That is why the downsizing of the apparatus to a palm sized model is limited.

In general, surface plasmon resonance measuring apparatuses, which are commercially available from, for example, Biacore K. K., Nippon Laser Electronics, have large dimensions of 760 (W) by 350 (D) by 610 cm (H) and a weight of 50 kg (BIAcore 1000 of Biacore K. K.), and they are limited to laboratory use.

Accordingly, for measuring the surface plasmon resonance of a sample in practice, the sample has to be brought to a laboratory. It has been impossible to obtain living measurement results on site.

The measuring system using the detecting system as shown in Fig. 4 is inevitably large and cannot satisfy the requirements for on-site-oriented ubiquitous, palm-sized differential surface plasmon resonance measuring apparatus that can make measurement anytime anywhere.

In order to overcome the disadvantages in the surface plasmon resonance measurement, the present invention provides a palm-sized inexpensive differential surface plasmon resonance measuring apparatus including an optical system and a detecting system to which new ideas have been applied. The apparatus is intended for use in measurement of an environmental organic pollutant and its measurement results are reliable. Also anyone can easily operate the apparatus without special experience anytime and anywhere including outdoors, in much the same way as sensors, such as pH glass electrodes.

In view of the above circumstances, the object of the present invention is to provide a small, inexpensive differential surface plasmon resonance measuring apparatus that is intended for ubiquitous measurements performed without special experience, and to a method for differentially measuring surface plasmon resonance.

In order to accomplish the object, the present invention provides a differential surface plasmon resonance measuring apparatus according to claim 1.

The present invention further provides a method for differentially measuring surface plasmon resonance according to claim 4.

Brief Description of the Drawings

Fig. 1 is a schematic representation of the principle of surface plasmon resonance;
Fig. 2 is a schematic representation of an immunological measurement using surface plasmon resonance;
Fig. 3 is a schematic diagram of a known differential surface plasmon resonance measuring apparatus;
Fig. 4 is a schematic diagram of a detecting system of a known differential surface plasmon resonance measuring apparatus;
Fig. 5 is a schematic diagram of a differential surface plasmon resonance measuring apparatus of the present disclosure;
Fig. 6 is a schematic diagram of an optical system of a palm-sized differential surface plasmon resonance measuring apparatus of the present invention;
Fig. 7 is a representation of measuring points of the palm-sized differential surface plasmon resonance measuring apparatus of the present invention, viewed from above a combination dual sensor cell;
Fig. 8 is a schematic diagram of splitting mirrors (step 1) of the palm-sized differential surface plasmon resonance measuring apparatus of the present invention;
Fig. 9 is a schematic diagram of the splitting mirrors (step 2) of the palm-sized differential surface plasmon resonance measuring apparatus of the present invention;
Fig. 10 is a schematic representation of two detections with a single photodetector using the splitting mirrors, in the palm-size differential surface plasmon resonance measuring apparatus of the present invention;
Fig. 11 shows schematic diagrams of a detecting system of the palm-sized differential surface plasmon resonance measuring apparatus of the present disclosure;
Fig. 12 shows a surface plasmon resonance measurement in a chemical sensor-like system;
Fig. 13 is a schematic diagram of a surface exposed to light of an electrode-type SPR combination sensor cell.
Fig. 14 is a schematic diagram of a positioning guide of an SPR sensor cell;
Fig. 15 is a schematic diagram of a detecting system using an adhesive optical interface film;
Fig. 16 is a flow chart of a process for forming a polymeric adhesive optical interface film;
Fig. 17 shows plots of relationships between the intensity of differential SPR and the changes in resonance angle;
Fig. 18 shows plots of the stability of the resonance angle in use of a PBS buffer solution (pH 7.4) according to the present disclosure;
Fig. 19 is a plot showing the stability of the resonance angle signals of a single-type apparatus;
Fig. 20 is a schematic diagram of a prototype of a combination sensor cell according to the present disclosure; and
Fig. 21 is a plot showing the 2,4-dichlorophenol concentration-following capability of a differential surface plasmon resonance measuring apparatus of the present disclosure.

Best Mode for Carrying Out the Invention

The apparatus of the present disclosure uses a combination sensor cell to embody the advantage that surface plasmon resonance can be measured in real time, in the fullest sense. The apparatus is small, resistant to disturbances, and very easy to operate.

Specifically, an apparatus achieving ubiquitous measurement of environmental pollutants has to be: (1) highly sensitive; (2) easy to operate; (3) with no moving parts; (4) small; (5) light; (6) capable of on-site measurement; (7) portable; (8) inexpensive; (9) battery-operated; (10) reliable; and (11) like a chemical sensor. The apparatus of the present invention satisfies these requirements for ubiquitous measurement.

The present disclosure aims for providing a sensor that anyone can easily use for ubiquitous surface plasmon resonance measurement anywhere. The surface plasmon resonance measuring sensor includes: (1) an optical system emitting light to a sample sensing portion and a reference sensing portion on a thin film, allowing the reflected light to reflect from splitting mirrors to split the light into beams, and focusing the beams on a single linear CCD sensor side by side; (2) a detecting system including a sensor cell with which the sample sensing portion and the reference sensing portion are easily disposed and held on a thin film deposited on a prism; and (3) an adhesive optical interface film exhibiting high adhesion, having a refractive index equivalent to that of a matching oil, eliminating the mechanical pressing of a sensor base and the prism on each other that is necessary during the use of the matching oil, and being an alternative to the known matching oil and easy to operate on site. The surface plasmon resonance measuring sensor of the present invention can simultaneously measure both a sample and a reference, and thus can achieve real-time measurement. In addition, the sensor can be so small, sensitive, and easy to operate as to achieve ubiquitous measurement.

Embodiments

Embodiments of the present disclosure will now be described.

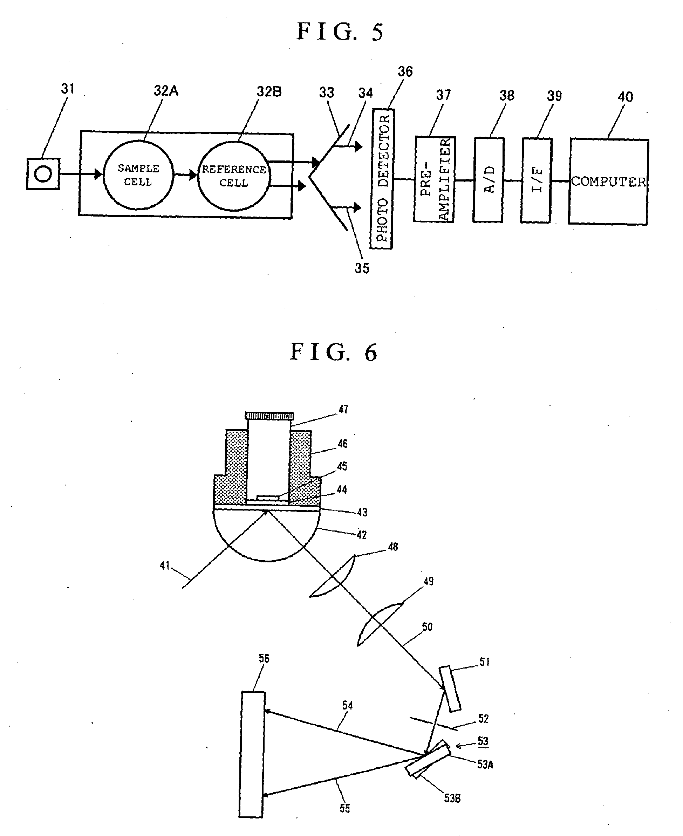

Fig. 5 is a schematic diagram of a differential surface plasmon resonance measuring apparatus of the present disclosure.
In this figure, reference numeral 31 represents a light source, 32 represents an SPR detector including a sample cell 32A and a reference cell 32B, 33 represents light-splitting mirrors, 34 represents a sample light beam, 35 represents a reference light beam, 36 represents a photodetector, 37 represents a preamplifier, 38 represents an A/D converter, 39 represents an interface, and 40 represents a computer.
The differential surface plasmon resonance measuring apparatus of the present invention, which aims for overcoming the structural limitation in downsizing the known SPR measuring apparatuses, includes a novel SPR optical system featuring a single light source and a single photodetector by use of the light-splitting mirrors 33, as shown in Fig. 5, thereby being downsized to a palm size (10 cm (H) by 170 cm (W) by 50 cm (D)) and a light weight (770 g). The palm-sized differential surface plasmon resonance measuring apparatus of the present disclosure includes the optical system, a detecting system, an electrical system, a notebook computer (Windows XP-compliant), and computer software (DUAL SPRWIN) for taking in SPR signals and converting the signals into concentrations.

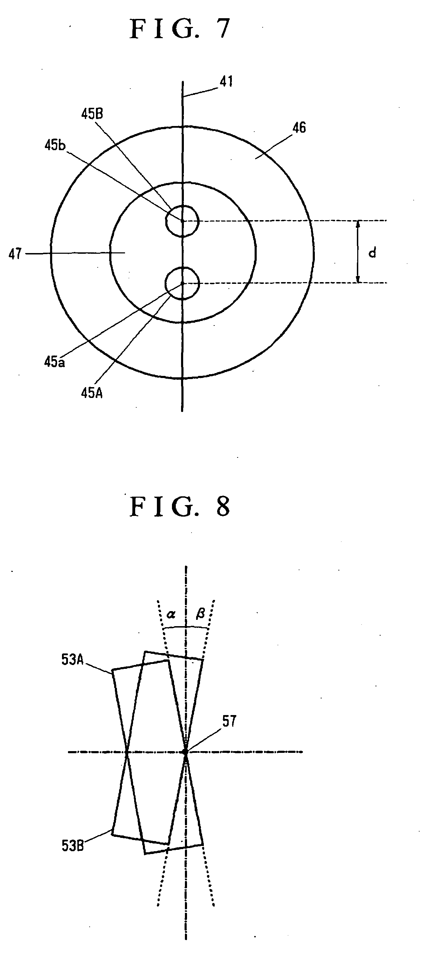

Fig. 6 is a schematic diagram of the optical system of the palm-sized differential surface plasmon resonance measuring apparatus, and Fig. 7 shows measuring points of the plasmon resonance measuring apparatus, viewed from above a combination dual sensor cell.
In these figures, reference numeral 41 represents incident light from a light source LED (wavelength: 770 nm), 42 represents a prism, 43 is an polymeric adhesive optical interface film, 44 represents a glass substrate, 45 represents sensing films, 45A represents a sample sensing film, 45B represents a reference sensing film, and d represents a distance between the centers of the sample sensing film 45A and the reference sensing film 45B (distance between measuring points 45a and 45b of both sensing films). The distance in the present embodiment is set at 5 mm in view of the overall size. Reference numeral 46 represents a sensor support, and 47 represents an electrode-type combination dual sensor cell. The sample sensing film 45A and the reference sensing film 45B, where SPR's are measured, are disposed at lower portions of the cell. These components constitute a sensor that measures SPR's of a sample and a reference while the polymeric adhesive optical interface film 43 is pressed on the glass substrate 44 underlying the lower surfaces of the sensing films 45. Reference numeral 48 represents a cylindrical lens, 49 represents a planoconvex lens, 50 represents a SPR reflected light, 51 represents a reflector, 52 represents a slit, 53 represents a splitting mirror unit including a splitting mirror 53A and the other splitting mirror 53B, 54 represents a reflected light beam from one splitting mirror 53A, 55 represents a reflected light beam from the other splitting mirror 53B, 56 represents a linear CCD sensor projecting the reflected light beams 54 and 55 on a line.
As described above, the light-splitting mirror unit 53 including the two mirrors 53A and 53B splits light into two light beams: a reflected light beam from the measuring point 45a (see Fig. 7) of the sample sensing film 45A and a reflected light beam from the measuring point 45b (see Fig. 7) of the reference sensing film 45B. More specifically, reflected light 50 generated at the sample sensing film 45A and the reference sensing film 45B underlying the dual sensor cell 47 by SPR's according to the permittivities of the sample and the reference is split into the reflected light beam 54 from the sample and the reflected light beam 55 from the reference by the two light-splitting mirrors 53A and 53B. These reflected light beams 54 and 55 are projected on a line by the linear CCD sensor 56.
In the present invention, light 41 emitted from the single light source is irradiated to the sample sensing film 45A and the reference sensing film 45B so as to be line-focused on them, so that the surface plasmon phenomenon occurs at the surfaces of the sample sensing film 45A and the reference sensing film 45B. The reflected light 50 from the sensing films is split into the sample light beam and the reference light beam by the splitting mirror unit 53 and projected on a line of the single linear CCD sensor 56 without losing its energy. The present disclosure features the electrode-type combination dual sensor cell 47 for a differential application, the line-focus image forming technique, and the reflected light-splitting mirrors.
The positions of splitting mirrors of the plasmon resonance measuring apparatus will be further described below.

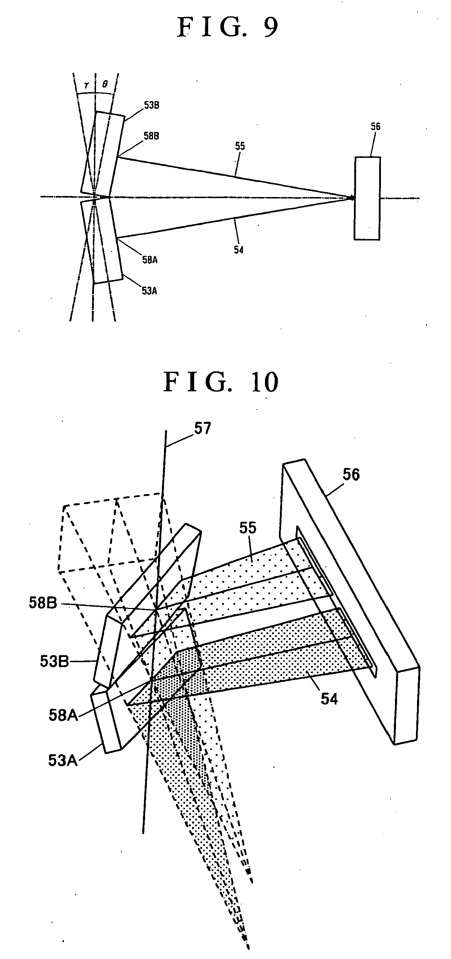

Fig. 8 is a schematic diagram showing positions of the splitting mirrors (step 1) of the plasmon resonance measuring apparatus, Fig. 9 is a schematic diagram of another splitting mirror (step 2) of the plasmon resonance measuring apparatus, and Fig. 10 is a schematic representation of two optical detections with a single photodetector using the splitting mirrors.

In order to project the reflected light 50 from the sensing films 45A and 45B on equally divided sensor regions of the linear CCD sensor 56 via the two splitting mirrors 53A and 53B, the angles of the two mirrors 53A and 53B are adjusted in two steps.

The following describes in detail how the splitting mirrors 53A and 53B are arranged and how the angles of the mirrors are adjusted.

The splitting mirrors 53A and 53B for splitting the reflected light 50 into a sample light beam and a reference light beam are arranged such that light-splitting points 58A and 58B on the respective splitting mirrors 53A and 53B lie on a Z axis 57, including the light beams from the measuring point 45a on the sample sensing film and the measuring point 45b on the reference sensing film at the distance d therebetween, as shown in Fig. 10.

As shown in Fig. 8, the splitting mirrors 53A and 53B are arranged respectively at angles of $\alpha$ and $\beta$ with respect to the Z axis 57 extending as the center line of these angles through the light-splitting points 58A and 58B so as to split the SPR reflected light 50 from the measuring points 45a and 45b on the sample sensing film and the reference sensing film into two beams in the direction toward the linear CCD sensor 56 (rightward direction).

Turning then to Fig. 9, the angles of the splitting mirrors 53A and 53B are adjusted to $\theta$ and $\gamma$ so that the SPR reflected light 50 at the measuring points 45a and 45b on the sample sensing film and the reference sensing film is collected from the Z axis 57 on the XY plane including a linear optical element of the linear CCD sensor 56 and on a line of the linear CCD sensor 56.

As described above, the two reflected light beams 54 and 55 are formed with no difference in optical path from the detecting point to the light-receptive point with the distance d maintained between the reflected light beams from the measuring points 45a and 45b of the sample sensing film and the reference sensing film, by adjusting the angles of the two splitting mirrors 53A and 53B in two steps. Thus, the reflected light 50 from the measuring points 45a and 45b of the sample sensing film and the reference sensing film can be equally split to light beams with no distortion to form an SPR signal image on the linear optical element of the linear CCD sensor 56. Thus, a palm-sized apparatus can be achieved.

The detecting system of the palm-sized differential surface plasmon resonance measuring apparatus will now be described.

In order to achieve the palm-sized differential surface plasmon resonance measuring apparatus, the detecting system as well as the optical system should be downsized to a palm size. Accordingly, in order to accomplish the principal object of the present disclosure, it is desired to develop a chemical sensor-like detecting system not using a liquid pump or the like.

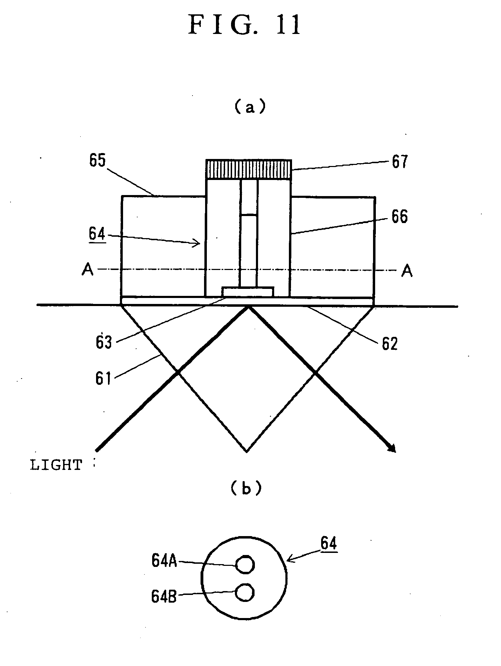

Fig. 11 schematically shows a detecting system of the palm-sized differential surface plasmon resonance measuring apparatus of the present disclosure. Fig. 11(a) is a schematic diagram of the detecting system of the palm-sized differential surface plasmon resonance measuring apparatus, and Fig. 11(b) is a sectional view taken along line A-A in Fig. 11(a).

In these figures, reference numeral 61 represents a prism, 62 represents a polymeric adhesive optical interface film, 63 represents a sensor, 64 represents a dual sensor cell including a sample cell 64A and a reference cell 64B, 65 represents a sensor cell guide, 66 represents a sensor cell support tube, and 67 represents a sensor cell cap.

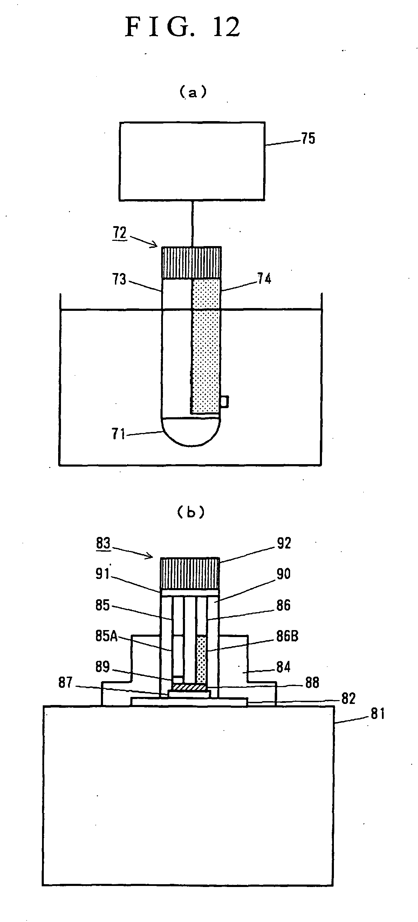

As clearly shown in these figures, the detecting system of the differential surface plasmon resonance measuring apparatus of the present disclosure does not require any pump or any sensor holder. For example, a pH measuring glass electrode, which is a well-known chemical sensor, includes a pH-sensing glass membrane at the end of a glass or plastic sensor cell support tube. The pH measuring glass electrode is inserted into a sample in combination with a silver-silver chloride reference electrode, thereby generating a potential difference according to the pH of the sample. To make clear the concept of the SPR measurement in a chemical sensor-like system according to the present disclosure, a technique for surface plasmon resonance (SPR) measurement (Fig. 12(b)) is compared to a known technique for pH measurement using a pH measuring glass electrode (Fig. 12(a)).

In Fig. 12(a), reference numeral 71 represents a sample, 72 represents a cylindrical combination pH electrode including a pH measuring glass electrode 73 and a silver-silver chloride reference electrode 74, 75 represents a potentiometer for measuring potentials generated between the pH measuring glass electrode 73 and the silver silver-chloride reference electrode 74. The combination pH electrode 72 has a bar shape with a diameter of about 12 mm and a length of about 150 mm. If a detecting portion is designed in such a chemical sensor form, the detecting portion becomes separable and the structure of the apparatus proper can be simplified and easily downsized. Such apparatuses also include dissolved oxygen meters and ion concentration meters.

Fig. 12(b) shows the overview of an SPR measurement in a chemical sensor-like system according to the present disclosure in comparison with the simplest chemical measurement system, pH measuring glass electrode (Fig. 12(a)).

In Fig. 12(b), reference numeral 81 represents an SPR detector for detecting the changes of SPR signals, and 82 represents a polymeric adhesive optical interface film for transmitting light with certain energy to the sensor through a prism. The polymeric adhesive optical interface film adheres to the prism. Reference numeral 83 represents an SPR-measuring electrode-type combination dual sensor cell, namely, a combination SPR electrode, corresponding to the combination pH electrode 72 shown in Fig. 12 (a). The combination SPR electrode is in a cylindrical form measuring about 14 mm in diameter by about 25 mm in length. This sensor cell for measuring SPR can be called "SPRODE", namely, SPR electrode, in the sense of a bar-shaped sensor, in comparison to the bar-shaped sensors for measuring potential or current that are called "ELECTRODES". Reference numeral 84 represents a sensor cell guide for securing the sensor cell during measurement, 85 represents a sample cell, 86 represents a reference cell, 85A represents a sample solution, and 86B represents a reference solution.

Reference numeral 87 represents a glass substrate (film) with a thickness of about 0.1 mm, serving as a base of the sensor cell, 88 represents a gold thin-film deposited at a thickness of 45 nm on the glass substrate 87, and 89 represents a sensing film formed of, for example, an antibody chemically fixed to the gold thin film 88. Reference numeral 90 represents a plastic sensor cell support, 91 represents a silicon sheet of about 1 mm in thickness, and 92 represents a sensor cell cap.

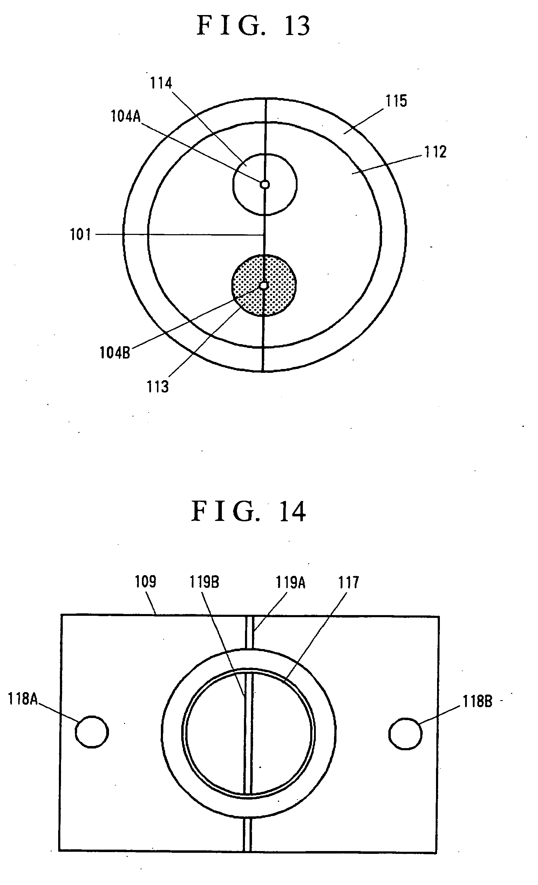

Fig. 13 shows the surface exposed to light of the electrode-type combination SPR sensor cell. In Fig. 13, reference numeral 101 represents light forming an image in a line focus at the interface between the prism and the sensor cell, 104A represents the center of the sample sensing film disposed at the bottom of the sample cell, and 104B represents the center of the reference sensing film, or the deposited gold thin film, disposed at the bottom of the reference cell. These points 104A and 104B have a constant distance of 5 mm. Reference numeral 112 represents the glass substrate (film), 113 represents the reference sensing film disposed on the glass substrate 112, 114 represents the sample sensing film to which an antibody or the like is fixed, which is disposed on the glass substrate 112, and 115 represents the sensor cell support tube.

Fig. 14 shows a positioning guide of the SPR sensor cell. In Fig. 14, reference numeral 109 represents the sensor cell guide, and 117 represents the sensor cell cap. Reference numerals 118A and 118B represent screw holes used for fixing the sensor cell guide 109 to the SPR detector being the main body of the apparatus. Reference numeral 119A represents a measuring position guideline of the sensor cell guide, and 119B represents a measuring position guideline of the sensor cell.

In the present invention, SPR is induced by irradiating the prism to form a line focus having a width of about 100 $\mu$m and a length of about 10 mm. Accordingly, the reaction points on the sample sensing film and the reference sensing film where SPR occurs are positioned on the line focus with the distance d of 5 mm maintained between the centers of the sample and reference sensing films. Then, after the measuring position guideline 119A of the sensor cell guide is aligned with the line focus, the sensor cell guide 109 is fixed to the body using the screw holes 118A and 118B. The screw holes 118A and 118B serve for fixing the sensor cell guide 109 to the body and for positioning for SPR detection, and their diameter can be arbitrary set.

The polymeric adhesive optical interface film will now be described.

Basically, the deposited gold film acting as the base of the sensor should be directly formed on the prism. Unfortunately, this process increases running cost for measurement. As an alternative to such a gold film, microscope cover glasses on which gold has been deposited are often used as the base of the sensor. In this approach, a matching oil having the same refractive index as the prism and the glass substrate acting as the sensor base has to be used to ensure the optical matching between the prism and the glass substrate. In addition, the flow cell, the glass substrate, and the prism are mechanically, uniformly pressed on each other with the oil therebetween to maintain smoothness because surface plasmon resonance occurs at a depth of 100 nm or less from the gold surface. However, such an approach is unsuitable for on-site measurement. Accordingly, in the present disclosure, a newly developed polymeric adhesive optical interface film is used which ensures optical matching and is easily fixed to the sensor cell.

An oil-free adhesive optical interface film has already been reported by the present inventors. However, this film has problems in repeatability, transparency, and adhesion. The polymeric adhesive optical interface film of the present disclosure is an improved type of that oil-free film.

In order to use a polymeric film as an alternative to the matching oil, the polymeric film must: (1) be transparent and colorless, (2) be highly adhesive, (3) have a refractive index same as or similar to that of the matching oil, and (4) in an analytical chemistry sense, produce SPR signals that are absolutely the same as the matching oil or that relatively correspond to the matching oil. The inventors first conducted research for a method for producing a polymeric film satisfying these requirements. The novel adhesive optical interface film is formed of an easily available polyvinyl chloride (PVC, polymerization degree: 700) in the similar manner to the general PVC wrapping film formation.

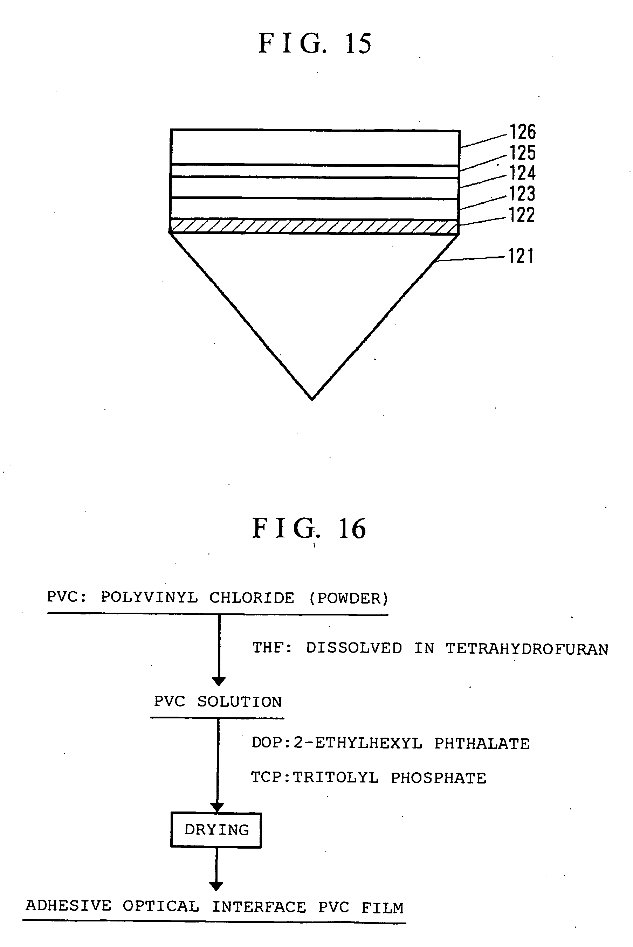

Fig. 15 is a schematic diagram of a detecting system using the polymeric adhesive optical interface film.

In this figure, reference numeral 121 represents a prism, 122 represents the polymeric adhesive optical interface film, 123 represents a glass film (substrate), 124 represents a deposited gold film, 125 represents a sample sensing film, 126 represents a sample solution. As shown in the figure, the optical interface is defined by a solid film.

Fig. 16 is a flow chart of a process for forming the polymeric adhesive optical interface film. The basic procedure of the process will now be described with reference to this figure.

It has been found that a transparent colorless film can be formed with a good reproducibility by the following procedure: PVC powder is dissolved in tetrahydrofuran (THF); subsequently a plasticizer, 2-ethylhexyl phthalate (DOP), and tritolyl phosphate (TCP) are added to the solution; and then, the solution is cast in a petri dish, followed by heat drying at 120°C for 2 hours in a Corning plate drier capable of temperature control. Effects of drying temperature were investigated. As a result, it has been found that lower drying temperature is suitable for forming films used for SPR. According to experimental results, films formed at 80°C were most superior in adhesion and separable in use for SPR.

Probably, the plasticizer, which has a high affinity for PVC and accordingly weakens the interaction with it to lower the melting point, enhances sliding of the PVC molecules at a controlled drying temperature of 80°C, consequently, producing a rubber elasticity and an adhesiveness. Also, PVC molecules are released from their intermolecular force by the plasticizer and the effect of temperature, and enhance their sliding so that the resulting film becomes flexible. It is believed that the resulting film is thus turned into an amorphous state from a crystalline state.

Then, PVC films having various compositions with different proportions of plasticizer and PVC were formed, and the refractive indices of the PVC films were measured with an Abbe refractometer produced by ATAGO. As a result, a film having a composition containing 0.5 g each of DOP and TCP relative to 0.2 g of PVC had a refractive index of 1.5211, exhibiting the closest value to the refractive index of the matching oil 1.5150. The film of this composition is thus employed as the adhesive optical interface film. This film is brought into close contact with the end of the sensor cell or the prism in advance, and loaded in the cylindrical support of the sensor cell along the guideline of the sensor cell. The sensor cell is pressed on the prism at about 20 newtons (N) with an index finger. Thus, optimal SPR signals can be obtained.

Up to this point, the essential elements of the present disclosure, namely, the optical system, the detecting system, and the polymeric adhesive optical interface film, have been described in detail. The palm-sized differential surface plasmon resonance measuring apparatus including these elements has the following specifications:

(1) Apparatus

Principle: surface plasmon resonance (SPR)
Differential system: splitting mirror, single light-receptive element
SPR measuring configuration: Kretchmann configuration Measuring range: 65° to 75°
Power source: AC/DC (100 V or 9 V battery)
Maximum continuous operation time: 10 hours
Dimensions: 170 by 100 by 50 mm
Body weight: 770 g

(2) Optical System

Light source: point source LED (wavelength: 770 nm, half-width: 50 nm)
Prism material: BK7
Polarizing filter: extinction ratio, 0.00071
Light-receptive element: 2048-pixel CCD line sensor
Gold base size: within 14 mm square
Optical interface: adhesive PVC film

(3) Detecting system

Sensor cell: Combination SProde
Flow cell: flow rate, 1 to 100 $\mu$L/min
Sample volume: 1 $\mu$L or more

(4) Performance

Resonance angle stability
Single line: 0.0002°
Differential line: 0.0004°

An example of the differential surface plasmon resonance apparatus, prototyped according to the present disclosure will now be described.

An optical system, a combination sensor cell, and an adhesive optical interface PVC film for differentially detecting surface plasmon resonance were prototyped and assembled into a differential surface plasmon resonance measuring apparatus. The apparatus was subjected to performance tests.

1. Relationship between SPR intensity and changes in resonance angle

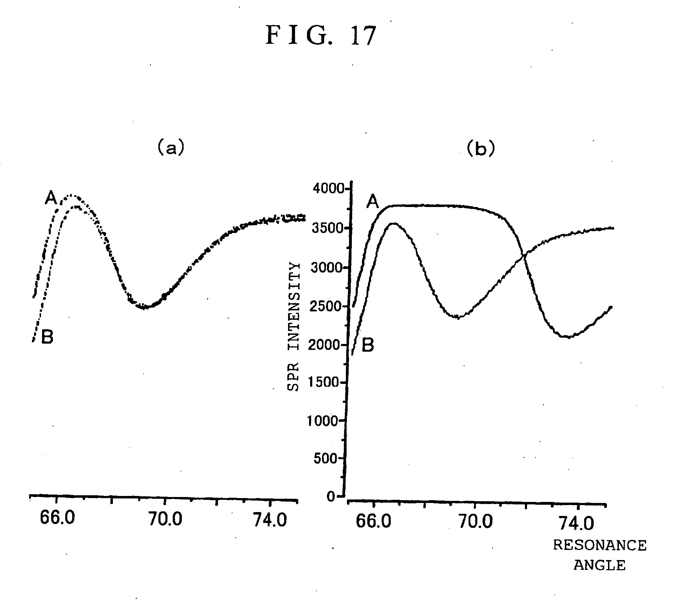

Fig. 17 shows plots of relationships between the intensity of differential SPR and the changes in resonance angle. Fig. 17(a) shows SPR curves of a blank cell prepared by filling the sample cell A and the reference cell B of the combination sensor cell with pH 7.4 buffer solution. Since the SPR intensities of the sample cell A and the reference cell B in the blank test are the same, their SPR's coincide with each other. Fig. 17(b) shows SPR curves when the reference cell B contains the same buffer solution and the sample cell A contains 0.1 mol/l glucose adjusted with the pH 7.4 buffer solution. It has been found that the resonance angle is varied according to the changes in glucose concentration, and that a differential surface plasmon resonance measuring apparatus can be achieved by calculating the difference between the sample resonance angle and the reference resonance angle. The difference of the SPR curves suggests that the SPR's at the two points of the combination sensor cell were correctly separated by the splitting mirror.

2. Resonance angle stability in the present disclosure

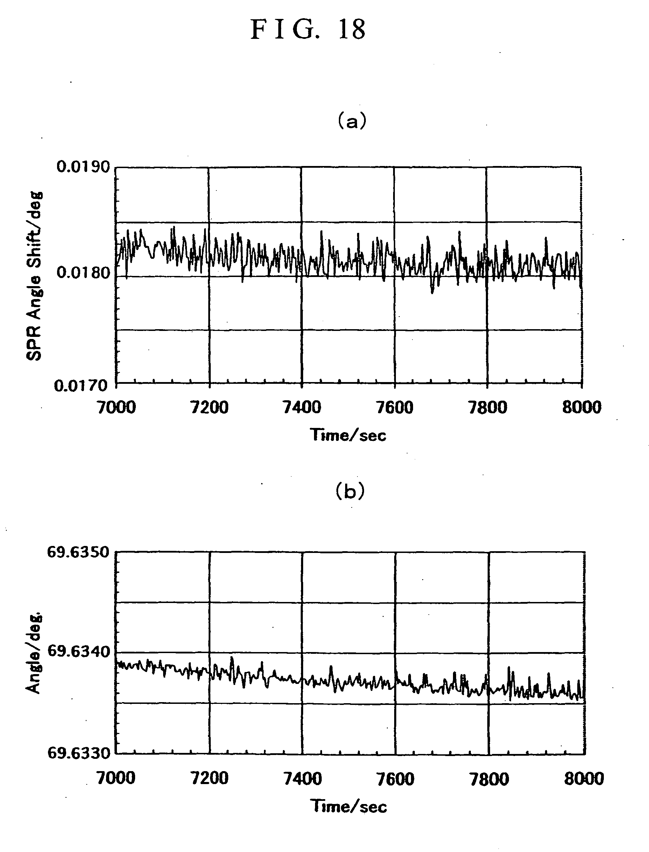

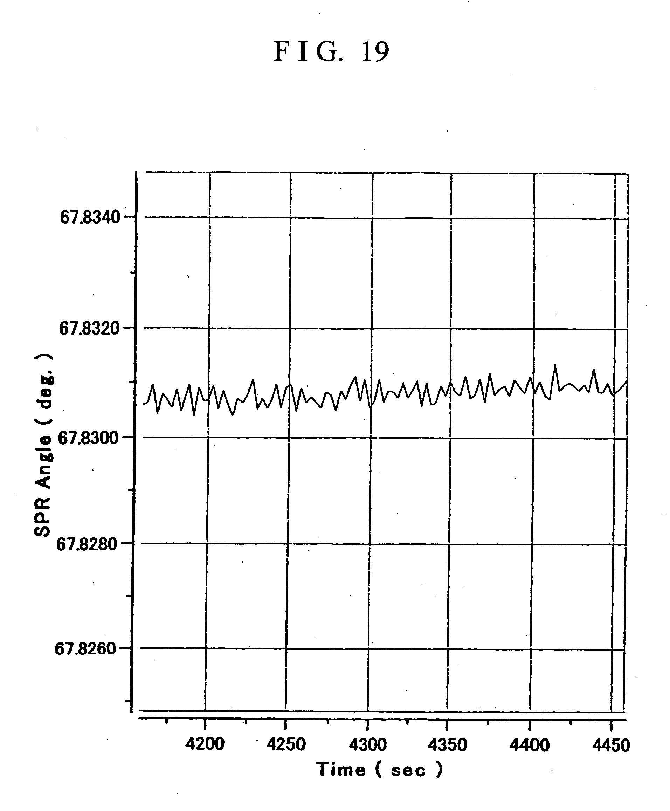

Fig. 18 shows plots of the stability of the resonance angle in use of a PBS buffer solution (pH 7.4) according to the present disclosure. Fig. 18(b) shows the changes in single line resonance angle [B] of the reference cell and Fig. 18(a) shows the changes in differential line resonance angle [A-B] being the difference between the sample cell and the reference cell. These results show that the stability of the single line resonance angle according to the present disclosure was 0.0002° and the stability of the differential line resonance angle was 0.0004°. On the other hand, the stability of a single mode surface plasmon resonance measuring apparatus based on the same principle was 0.001° as shown in Fig. 19. It has been shown that the angular resolution of the differential apparatus according to the present invention is 5 times or more increased than that of the single mode apparatus. The differential line angle stability was 0.0004° and larger than the single line angle stability. This is probably because of negative variations resulting from the subtraction between the resonance angles of the sample cell A and the reference cell B. The optical system of the present invention uses the same 2048-pixel CCD line sensor as in the single mode apparatus. Since, in the differential apparatus, reflected light from the sensor cell is split into two beams by the splitting mirrors, the practical pixel number is reduced by about half to 500 from 900. Thus, the present inventors thought that the single line resolution was thus 5 times increased. Then, the practical pixel number was reduced to 250 by adjusting the splitting mirrors. The results are shown in Table 1.

[Table 1]

| ITEMS / MEASURING SYSTEM | Light Source | CCD Line Sensor | CCD Signal Processing | Practical Pixel Number | Single Line Resonance Angle Stability | Differential Line Resonance Angle Stability |
|---|---|---|---|---|---|---|
| Single | 770 nm LED | 2048 pixel | Moving average of 7 cycle measurements with 3-sec. sampling | 900 | 0.001 | |
| Differential-1 | | | | 500 | 0.0002 | 0.00004 |
| Differential-2 | | | | 250 | 0.00004 | 0.00008 |

As clearly shown in Table 1, the stability in single line resonance angle was 0.00004° and thus the resolution was further 5 times increased as expected. For the same reason, the stability in differential line resonance angle was 0.00008°. As described above, it has been found that resolution of the resonance angle of the differential surface plasmon resonance measuring apparatus using the optical system of the present invention is inversely proportional to the practical pixel number.

3. Application to Immunological Measurement

To show the possibility of applying the differential surface plasmon resonance measuring apparatus of the present invention to immunological measurement, a combination sensor cell was prototyped and the SPR of 2,4-dichlorophenol, which has been known as a dioxin analog, was measured.

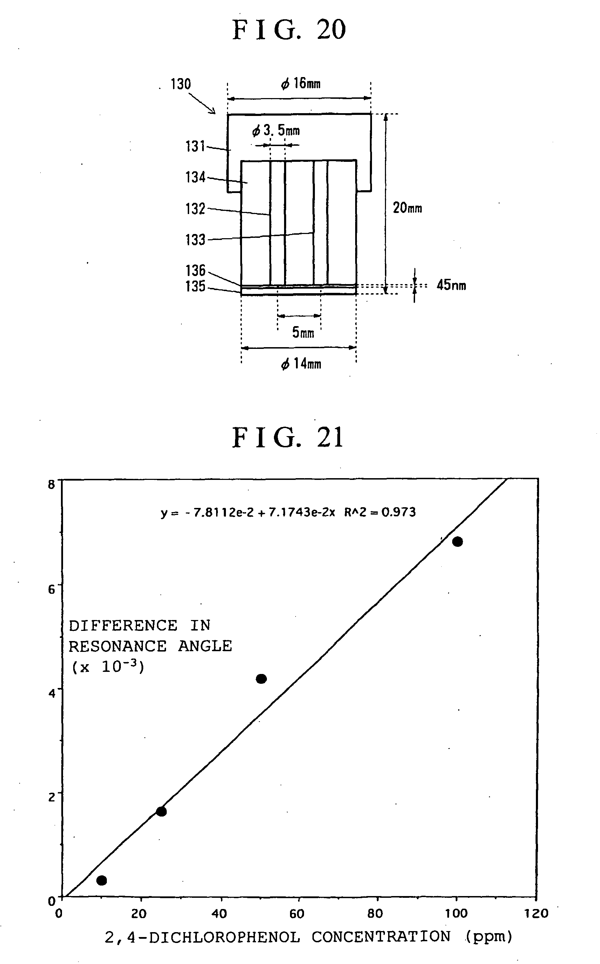

Fig. 20 shows the structure of the prototyped combination sensor cell. As shown in this figure, the combination sensor cell 130 having a body of 14 mm in diameter and 20 mm in height includes a glass substrate 135 having a 45 nm thick deposited gold film 136, an epoxy resin support tube 134, and a sensor cell cap 131 of 16 mm in diameter. The sample cell 132 and the reference cell 133 each have an internal diameter of 3.5 mm and the distance between these two cells is set at 5 mm. To the sample cell 132 of the combination sensor cell 130, 2,4-dichlorophenol antibody was fixed in a conventional manner to prepare 2,4-dichlorophenol combination immunosensors. Four 2,4-dichlorophenol combination immunosensors were prepared. Reference cells 133 were each filled with PBS buffer solution (pH 7.4) as a reference solution. Sample cells 132 were respectively filled with 10, 25, 50, 100 ppm 2,4-dichlorophenol solution whose concentrations were adjusted with the PBS buffer solution, and thus, measuring sensor cells were prepared. For determination, the combination sensor cell was gently dropped onto the adhesive optical interface PVC film previously fixed to the body of the measuring apparatus along the sensor guide, and a pressure of about 20 N was applied with an index finger. Reflected light beams of the sample and the reference reduced by SPR generated at each point on the SPR sensing surfaces of the sample cell 132 and the reference cell 133 on the 10 mm line focus on the prism were measured with a CCD light-receptive element.

Fig. 21 shows a thus obtained calibration curve. As clearly shown in this figure, although the sensor cells have variations from each other, a satisfactory calibration curve was obtained with a multiple correlation coefficient of 0.973 in the 2,4-dichlorophenol concentration region of 10 to 100 ppm. Thus, it has been shown that the differential surface plasmon resonance measuring apparatus of the present invention, in which an antibody is fixed to the sample cell of the combination sensor cell, can readily measure antigen-antibody reactions in real time without labeling the antibody. Although this section has described an SPR immunosensor, it goes without saying that the present invention can use any chemical sensor-like system capable of being generally used for SPR measurement, and that any material can be sensed in a chemical sensor-like system as long as the material can produce an interaction with a functional material and consequently varies the refractive index.

Examples of the present invention have been described. The present invention allows an SPR measuring apparatus whose application has been limited to research use in laboratories to achieve the following:

(1) By newly designing an optical system, the SPR measuring apparatus can be downsized, be differentially operated, and have a high resolution.
(2) In order to simplify the determination procedure, an inexpensive portable downsized apparatus is provided using a newly designed polymeric adhesive optical interface film and combination sensor cell that anyone can easily operate anywhere, thereby achieving ubiquitous measurement.

It has been concerned that chemical pollutants, especially, low-molecular-weight organic compounds including endocrine disrupters, such as dioxin, stimulant drugs, and narcotic drugs may affect society. However, the amount of scientific information about those harmful organic chemical compounds is small because apparatuses for measuring those compounds are expensive and difficult to operate. Accordingly, portable apparatuses are desired which anyone can easily operate anywhere on site and which can provide various types of information. Unfortunately, only inorganic compounds, such as pH, DO (dissolved oxygen), and specific ions, can be measured by palm-sized immersion type sensor-like apparatuses and there is no simplified apparatus for measuring organic compounds so far. The present disclosure provides a combination sensor cell including a sample sensing film to which a material to be sensed is fixed and a reference sensing film. Thus, it is believed that the present disclosure can lead the way to a novel sensor-pressing SPR measurement (SProde method) for organic compounds. However, the concentrations in the environment of low-molecular-weight organic compounds, such as endocrine disrupters, are as extremely low as the order of, normally, ppt (pg/mL) to ppb (ng/mL).

The detection sensitivity of the immunological SPR measurement for low-molecular-weight organic compounds having molecular weights of about 200 is about 100 ng/L. In order to enhance the detection sensitivity of immunological measurement for low-molecular-weight organic compounds, such as 2,4-dichlorophenol (molecular weight: 175), a competitive method is generally employed in which an antibody and an antigen are added to be brought into competition with a antibody-fixed sensor. The detection sensitivity of this method is about 5 ppd. However, the method increases the number of steps in the procedure by one, and accordingly impairs the advantage that SPR can be measured in real time. However, the lack of absolute detection sensitivity in the SPR measurement can be compensated by solid state extraction that can be directly measured. The solid state extraction is suitable for compensating the lack of detection sensitivity in SPR measurement because it is versatile and readily allows 1000-times concentration. Table 2 shows the results of a study of the possibility that solid phase extraction achieves 125-times concentration of 2,4-dichlorophenol.

[Table 2]

| 2,4-dichlorophenol in raw water (ppb) | Concentrated to (ppm) | Concentration rate | Concentration error (%) |
|---|---|---|---|
| 10 | 11.67 | 117 | -6 |
| 30 | 31.04 | 103 | -18 |
| 50 | 61.25 | 123 | -2 |

A divinylbenzene column ENV$_+$ (solid weight: 200 mg; reservoir volume: 6 mL) produced by IST was used as the extraction column. Concentration was performed under the following conditions: sample volume of 1 L (pH 2); flow rate of 60 mL/min; and eluate of 8 mL of 0.1% formic acid/50% methanol. Table 2 clearly shows that 2,4-dichlorophenol on the order of ppb can be concentrated certainly to the order of ppm with an average error of -8.7%, in spite of extraction loss. Even at this time a combination of the above results and solid phase extraction can achieve determination of 2,4-dichlorophenol on the order of ppb with the measuring apparatus of the present invention. Since SPR occurs at a depth of 100 nm from the interface with the sensor, a sample volume of about 1 $\mu$L can suffice for determination. By microsizing the extraction column for extracting 1 $\mu$L of sample for analysis, taking this advantage of SPR, the concentration efficiency can further be enhanced. In this instance, 1 ppt of 2,4-dichlorophenol can be determined from 1 L of raw water.

Up to this point examples according to the present invention have been described, and it has been shown that the differential surface plasmon resonance measuring apparatus of the present invention, which is small like a palm, exhibit basic performances superior or equal to the known SPR measuring apparatus whose application is limited to laboratory use. In addition, the apparatus of the present invention is so portable and easy that anyone can operate anywhere. If the apparatus of the present invention is spread to society, ubiquitous approaches using the differential plasmon resonance measuring apparatus can be proposed to various fields associated with organic compounds, such as those of environment, analytical chemistry, medical drugs, safety, chemical industry, and research, and thus a large amount of important information can be produced. The information contributes to appropriate decisions in various fields. Thus, the present invention certainly helps to improve and develop human society.

The present disclosure provides the following advantages:

1. Optical System

The optical system according to the present disclosure has the following features. While the known optical system measures a single point of a sample chip on the prism, the present disclosure makes it possible to measure two points of a sensor on the prism by splitting reflected light from two points including SPR signals on the prism into two beams and projecting the beams on two positions of a photodetector by two splitting mirrors. If the same linear CCD element as in the known apparatus is used, the theoretical resolution of SPR signals is reduced to half that of the known apparatus. However, there is no problem in angular resolution because a sufficient number of data points are ensured for high-resolution peak detection with computer calculation.

If two linear CCD sensors are used for the known optical system, electronics must include two preamplifiers and two A/D converters, consequently increasing costs and size. The advantages of the optical system according to the present disclosure are clearly shown in the following:

(1) Design for small differential system

Taking advantages of the structure using a single linear CCD sensor, a novel optical system can be provided which can lead to a downsized differential surface plasmon resonance measuring apparatus. Actually, a prototype measured 170 cm (W) by 100 cm (H) by 50 cm (D) and weighed 770 g. Also, the optical system according to the present disclosure can be used as the known single-mode optical system by replacing the splitting mirrors with a reflector.

(2) Temperature Compensation

In the one-point measurement by the known apparatus, SPR signals are derived from the measurement of the refractive index (or permittivity) of the sample in principle. Consequently, the signals drift depending on temperature. In order to compensate the drift, it has been necessary that a semiconductor temperature sensor or the like having a high resolution be additionally installed to measure temperature, and that SPR signal data be calibrated according to the obtained temperature. If the SPR signals are used for a biosensor in an antigen-antibody reaction, their variations are extremely small. Then, a sample solution and another sample for temperature compensation having a high temperature coefficient are placed at the two measuring points on a sample chip in differential SPR, as an alternative to use of the temperature sensor. In addition to this, for temperature compensation of SPR signals, a temperature sensor matching with the temperature characteristics of the signals is used. In the present disclosure, by placing a sample solution and a reference solution for temperature compensation that has the same composition as the sample solution but not containing the measuring object at the two measuring points on a single sensor, the refractive indices and temperature changes of the solutions having the same composition at the two measuring points on the same sensor are each compensated in real time. Thus, SPR signals according to an antigen-antibody reaction can be measured.

(3) Real-time SPR measurement

A sample and a reference solution having the same composition as the sample but not containing the measuring object are placed in the sample cell and the reference cell on the same sensor, respectively. These two points are simultaneously measured such that SPR signals of the sample are measured while SPR signals of the zero point before reaction are continuously being measured. Thus SPR signals after reaction with the measuring object can be obtained from the difference between the two points in real time. Alternatively, a sample solution and a reference solution having the same composition as the sample but containing a known concentration of the measuring object may be placed in the sample cell and the reference cell on the same sensor, respectively. These two points are simultaneously measured such that the difference between the SPR signals of the reference solution and the SPR signals of the sample solution is simultaneously observed on a single detector while the SPR signals of the reference solution acting as the reference of reaction quantity are continuously being measured. In this measurement, the comparison of concentrations of the measuring object can be observed in real time. Thus, the measurement can be applied to screening and on-off alarms.

(4) Multipoint Measurement

The present disclosure has been described in detail using a two-point differential system in which SPR signals at two points at a distance of 5 mm of the SPR combination sensor cell, through the prism and the adhesive optical interface PVC film are divided into signals of the sample and the reference by splitting mirrors and are measured on a photodetector. By reducing the distance between the measuring points or by downsizing the sensor to a microchip, or reversely by increasing the dimensions of the sensor or the prism to some extent, multi-point SPR at 3 to n measuring points can be measured with a single photodetector with basically the same optical system and 3 to n splitting mirrors.

2. Detecting System

(1) Combination Sensor Cell (SProde)

The combination sensor cell is brought by expanding the ranges of the possibility of the known surface plasmon measurement, and it results from the development of a chemical sensor-like system for SPR measurement. In general, pH measuring glass electrodes are called pH electrodes in the sense that they are bar-shaped sensors for measuring electrochemical phenomena that occur at the interface of the glass membrane selectively responding to hydrogen ion concentration. The SPR combination sensor cell of the present disclosure measures surface plasmon resonance, which is the change of light occurring at the interface of a sensing film selectively responding to a measuring object, in a form of a bar-shaped sensor similar to the pH electrode. The combination sensor cell of the present disclosure can be defined as a novel chemical sensor based on the detection of light according to SPR, and thus can be called SProde. This produces a new area in the field of chemical sensors.

As described above, the SPR-measuring chemical sensor-like system is expected to expand the ranges of its application so that surface plasmon measuring apparatuses, which have been intended only for research use, are simplified into on-site field apparatuses that anyone can easily operate anywhere.

In the known method for detecting surface plasmon resonance, a flow cell using a cell holder is mechanically brought into close contact with the sensor with an optical matching oil therebetween. Then, a reference solution is delivered to the flow cell with a pump and the light intensity of the SPR generated at this moment is stored. Subsequently, a sample is subjected to the same operation and the difference between the SPR signals is compared to the concentration of the measuring object. However, this method limits the downsizing and simplification of the apparatus for on-site field use because this method uses an expensive pump for delivering the sample and the cell holder for mechanically pressing the flow cell for SPR measurement. Furthermore, the detecting system of this method still has problems to be solved. Specifically, this method involves a time lag between the measurements of the reference solution and the sample solution, and does not embody real-time measurement in the fullest sense. Also, two flow paths are required for a differential system, and the structure thus has a limitation in terms of space.

The present disclosure solves these problems the known method has by providing the combination sensor cell and the polymeric adhesive optical interface film. In the present invention, visible light acting as energy for inducing SPR is emitted from an LED light source (wavelength: 770 nm) and line-focused on the sample sensing film and the reference sensing film on the combination sensor cell so as to measure SPR signals simultaneously generated at sample sensing film and the reference sensing film. Thus, relative values according to the SPR signals of the sample and the reference are obtained in real time in the fullest sense. For a large number of samples to be measured, the present invention can be easily used in on-off/screening applications.

(2) Real-Time Sensing

For a simplified immunological method, an enzyme-immunological approach that has been known as the ELISA method is generally employed. This method does not realize real-time measurement because antigen-antibody reaction to be measured is introduced to an enzyme system and B/F separation is required to eliminate the influences of physical nonspecific adsorption. These steps increase the time of determination and thus unsuitable for on-site field measurement. On the other hand, SPR measurement can realize real-time measurement in principle. Measurements using a flow cell are however not performed in real time in a strict sense because samples are measured after measuring a blank and then the difference between their signals is taken. In the system using combination sensor cell of the present disclosure, in which no pump is used for introducing samples or a blank to the sensor, SPR occurs at points at a predetermined distance on the line focus on the sample cell and the reference cell. Consequently, reflected light detected by the CCD line sensor can be measured in real time with no time lag.

(3) Reliability of SPR Immunological Measurement

As described in the above (2), the known ELISA method requires B/F separation to obtain information according to immune response. The combination sensor cell system of the present disclosure can simultaneously measure the SPR occurring in the sample cell and the reference cell. By thus measuring signals according to the immune response, nonspecific signals, and signals according to bulk components in the sample cell and measuring nonspecific signals and signals according to the bulk components in the reference cell, the signals according to the immune response can be selectively measured without the step of B/F separation.

3. Polymeric Adhesive Optical Interface Film

In the known method, in order to ensure optical matching between the prism and the sensor, a matching oil having the same refractive index as the prism and the glass substrate being a sensor base is applied to the prism before each measurement, and the sensor including the glass substrate is disposed on the prism. In addition, in order to bring the sensor into close contact with the prism, the sensor is mechanically pressed with a sensor holder. Furthermore, the matching oil is toxic, and it must be meticulously used. Use of such oil is unsuitable for apparatuses intended for use in the field. In the present disclosure, it suffices that the combination sensor cell is pressed on an adhesive interface film with an index finger, as long as the adhesive interface PVC film is fixed to the prism in advance. Since the film is adhesive, no sensor cell holder is required. Also, since the solvent in the film is solidified with PVC, it is much safer than the oil. The polymeric adhesive optical interface film makes the differential surface plasmon resonance measuring apparatus of the present disclosure downsized and makes its operation safe and easy.

The major advantages of the present invention has been described. The differential surface plasmon resonance measuring apparatus embodies the advantages that SPR can be measured in real time in the fullest sense by use of the combination sensor cell, and the apparatus is small and resistant to disturbances, and very easy to operate.

The present invention is not limited to the foregoing embodiments and examples, and various modifications can be made according to the scope of the invention according to the claims.

Industrial Applicability

The differential surface plasmon resonance measuring apparatus and the method for differentially measuring surface plasmon resonance according to the present invention are suitable for ubiquitous on-site measurement using a palm-size-oriented apparatus for measuring a low-molecular-weight environmental organic pollutant.

**Claims**

**1.** A differential surface plasmon resonance measuring apparatus comprising:

(a) an incident light optical system, wherein light (41) enters at an incident angle in a range including the resonance angle;

(b) a sample setting device including a sample solution-fixing portion and a reference solution-fixing portion on a thin film (45) deposited on a prism (42), the sample solution-fixing portion and the reference solution-fixing portion lying in the region irradiated with a beam of the incident light (41);

(c) a projection optical system including a plurality of mirrors (53A, 53B) for splitting light reflected from the sample solution-fixing portion and the reference solution-fixing portion into respective beams thereof and turning the directions of the beams to project the beams on a single line; and

(d) a linear CCD sensor (56), each of the plurality of mirrors being configured to reflect a respective beam onto the linear CCD sensor (56) such that the reflected beams are both incident on said linear CCD sensor (56).

2. The differential surface plasmon resonance measuring apparatus according to Claim 1, wherein the plurality of mirrors include a first mirror for reflecting the reflected light from the sample solution-fixing portion at a first angle and a second mirror for reflecting the reflected light from the reference solution-fixing portion at a second angle.

3. The differential surface plasmon resonance measuring apparatus according to Claim 1, further comprising an adhesive optical interface film disposed on the prism, the adhesive optical interface film having a refractive index matched with the refractive index of the prism.

4. A method for differentially measuring surface plasmon resonance, the method comprising: emitting light (41) from a light source having a specific wavelength so as to form a line focus on a sensor including a prism (42) and a glass substrate (44); generating surface plasmon resonances at sensing portions of a sample cell and a reference cell that are provided on the line focus at a predetermined distance to reduce the intensity of the light reflected from the sensing portions; allowing the beams of the reflected light to reflect from light-splitting mirrors (53A, 53B) having different angles with the beams maintaining a distance equal to the predetermined distance between the centers of the sensing portions and thus splitting the reflected light into two optical paths (54, 55); and pressing an electrode-type combination sensor cell including sensing films corresponding to the sample portion and the reference portion on an adhesive optical interface film adhering to the upper surface of the prism, having a refractive index matched with that of the prism, whereby an optical system performing detection of the reflected light split into said two optical paths (54, 55) in two regions of a single CCD line sensor (56) measures the surface plasmon resonances generated in the sample cell and the reference cell, with optical matching maintained between the sensor, the adhesive optical interface film, and the prism (42).

5. The method for differentially measuring surface plasmon resonance according to Claim 4, wherein the adhesive optical interface film is a polymeric adhesive optical interface film.

6. The method for differentially measuring surface plasmon resonance according to Claim 5, wherein the polymeric film comprises polyvinyl chloride.

7. The method for differentially measuring surface plasmon resonance according to Claim 5 or 6, wherein the sample cell is disposed on the adhesive optical interface film without using a matching oil having the same refractive index as the prism and the glass substrate.

8. The method for differentially measuring surface plasmon resonance according to Claim 7, wherein a substance interactive with a functional material and having a refractive index that is varied by the interaction is measured in a chemical sensor-like system.

9. The method for differentially measuring surface plasmon resonance according to Claim 8, wherein an antibody is fixed to the sample cell so that an antigen-antibody reaction is measured in an immunosensor-like system.

10. The method for differentially measuring surface plasmon resonance according to Claim 4, wherein the electrode-type combination sensor cell is pressed at a force of approximately 20 N.

**Patentansprüche**

1. Vorrichtung zur differenziellen Oberflächenplasmonenresonanz-Messung, umfassend:

(a) ein optisches Einfallslichtsystem, bei dem Licht (41) mit einem Einfallswinkel eintritt, der in einem den Resonanzwinkel einschließenden Bereich liegt;

(b) eine Probenerhärtungseinrichtung, die einen Probenlösungs-Fixierungsabschnitt und einen Referenzlösungs-Fixierungsabschnitt auf einer Dünnschicht (45) enthält, die auf einem Prisma (42) aufgetragen ist, wobei der Probenlösungs-Fixierungsabschnitt und der Referenzlösungs-Fixierungsabschnitt in dem Bereich liegen, der mit einem Strahl des Einfallslichts (41) bestrahlt wird;

(c) ein optisches Projektionssystem, das eine Vielzahl von Spiegeln (53A, 53B) zum Aufspalten des vom Probenlösungs-Fixierungsabschnitt und vom Referenzlösungs-Fixierungsabschnitt reflektierten Lichts in jeweilige Strahlen davon und zum Umkehren der Richtungen der Strahlen enthält, um die Strahlen auf eine einzelne Linie zu projizieren; und

(d) einen linearen CCD-Sensor (56), wobei jeder der Vielzahl von Spiegeln (53A, 53B) so konfiguriert ist, dass ein jeweiliger Strahl auf den linearen CCD-Sensor (56) reflektiert wird, sodass die reflektierten Strahlen beide auf dem linearen CCD-Sensor (56) auftreffen.

2. Vorrichtung zur differenziellen Oberflächenplasmonenresonanz-Messung gemäß Anspruch 1, wobei die Vielzahl von Spiegeln einen ersten Spiegel zum Reflektieren des reflektierten Lichts von dem Probenlösungs-Fixierungsabschnitt in einem ersten Winkel und einen zweiten Spiegel zum Reflektieren des reflektierten Lichts von dem Referenzlösungs-Fixierungsabschnitt in einem zweiten Winkel enthält.

3. Vorrichtung zur differenziellen Oberflächenplasmonenresonanz-Messung gemäß Anspruch 1, des Weiteren umfassend eine Optikschnittstellen-Klebeschicht, die auf dem Prisma aufgetragen ist, wobei die Optikschnittstellen-Klebeschicht einen Brechungsindex hat, der an den Brechungsindex des Prismas angepasst ist.

4. Verfahren zur differenziellen Messung der Oberflächenplasmonenresonanz, das Verfahren umfassend: das Ausstrahlen von Licht (41) von einer Lichtquelle mit einer speziellen Wellenlänge, sodass ein Strichfokus auf einem Sensor gebildet wird, der ein Prisma (42) und ein Glassubstrat (44) enthält; das Erzeugen von Oberflächenplasmonenresonanzen in Abtastabschnitten einer Probenzelle und einer Referenzzelle, die auf dem Strichfokus in einem vorgegebenen Abstand bereitgestellt sind, um die Intensität des von den Abtastabschnitten reflektierten Lichts zu reduzieren; das Zulassen, dass die Strahlen des reflektierten Lichts von den Lichtaufspaltungsspiegeln (53A, 53B), die verschiedene Winkel haben, reflektiert werden, wobei die Strahlen einen Abstand beibehalten, der dem vorgegebenen Abstand zwischen den Zentren der Abtastabschnitte gleicht, wodurch das reflektierte Licht in zwei Strahlengänge (54, 55) aufgespalten wird; und das Aufpressen einer elektrodenartigen Kombinationssensorzelle, die Abtastschichten entsprechend dem Probenabschnitt und dem Referenzabschnitt auf einer Optikschnittstellen-Klebeschicht enthält, die auf der Oberseite des Prismas klebt, einen Brechungsindex hat, der an den des Prismas angepasst ist, wodurch ein optisches System, das die Erkennung des reflektierten Lichts, das in die beiden Strahlengänge (54, 55) aufgespalten ist, in zwei Bereichen eines einzelnen CCD-Strichsensors (56) durchführt, die in der Probenzelle und der Referenzzelle erzeugten Oberflächenplasmonenresonanzen misst, wobei die optische Anpassung zwischen dem Sensor, der Optikschnittstellen-Klebeschicht und dem Prisma (42) beibehalten wird.

5. Verfahren zur differenziellen Messung der Oberflächenplasmonenresonanz gemäß Anspruch 4, wobei die Optikschnittstellen-Klebeschicht eine Optikschnittstellen-Klebeschicht auf Polymerbasis ist.

6. Verfahren zur differenziellen Messung der Oberflächenplasmonenresonanz gemäß Anspruch 5, wobei die Schicht auf Polymerbasis Polyvinylchlorid umfasst.

7. Verfahren zur differenziellen Messung der Oberflächenplasmonenresonanz gemäß Anspruch 5 oder 6, wobei die Probenzelle auf der Optikschnittstellen-Klebeschicht angeordnet ist, ohne ein Anpassungsöl zu verwenden, das denselben Brechungsindex wie das Prisma und das Glassubstrat hat.

8. Verfahren zur differenziellen Messung der Oberflächenplasmonenresonanz gemäß Anspruch 7, wobei eine Substanz, die mit einem Funktionswerkstoff interagiert und einen Brechungsindex hat, der durch die Interaktion variiert wird, in einem chemischen sensorartigen System gemessen wird.

9. Verfahren zur differenziellen Messung der Oberflächenplasmonenresonanz gemäß Anspruch 8, wobei ein Antikörper so an der Probenzelle befestigt ist, dass eine Antigen-Antikörperreaktion in einem immunsensorartigen System gemessen wird.

10. Verfahren zur differenziellen Messung der Oberflächenplasmonenresonanz gemäß Anspruch 4, wobei die elektrodenartige Kombinationssensorzelle mit einer Kraft von ungefähr 20 N aufgepresst wird.

**Revendications**

1. Un appareil de mesure différentielle par résonance plasmonique de surface comprenant :

   (a) un système optique à lumière incidente, où la lumière (41) entre à un angle d'incidence dans une plage incluant l'angle de résonance,
   (b) un dispositif de réglage d'échantillon comprenant une partie de fixation d'une solution échantillon et une partie de fixation d'une solution de référence sur une couche mince (45) déposée sur un prisme (42), la partie de fixation d'une solution échantillon et la partie de fixation d'une solution de référence se trouvant dans la zone irradiée par un faisceau de la lumière incidente (41),
   (c) un système optique de projection comprenant une pluralité de miroirs (53A, 53B) destiné à séparer la lumière réfléchie à partir de la partie de fixation d'une solution échantillon et de la partie de fixation d'une solution de référence en faisceaux respectifs émanant de celles-ci et destiné à orienter les directions des faisceaux de façon à projeter les faisceaux sur une ligne unique, et
   (d) un capteur CCD linéaire (56), chacun des miroirs de la pluralité de miroirs étant configuré de façon à réfléchir un faisceau respectif vers le capteur CCD linéaire (56) de sorte que les faisceaux réfléchis soient tous les deux incidents sur ledit capteur CCD linéaire (56).

2. L'appareil de mesure différentielle par résonance plasmonique de surface selon la revendication 1, où la pluralité de miroirs comprend un premier miroir destiné à réfléchir la lumière réfléchie à partir de la partie de fixation d'une solution échantillon à un premier angle et un deuxième miroir destiné à réfléchir la lumière réfléchie à partir de la partie de fixation d'une solution de référence à un deuxième angle.

3. L'appareil de mesure différentielle par résonance plasmonique de surface selon la revendication 1, comprenant en outre un film d'interface optique adhésif disposé sur le prisme, le film d'interface optique adhésif possédant un indice de réfraction apparié à l'indice de réfraction du prisme.

4. Un procédé de mesure différentielle par résonance plasmonique de surface, le procédé comprenant les opérations visant à : émettre de la lumière (41) à partir d'une source lumineuse possédant une longueur d'onde spécifique de façon à former un foyer linéaire sur un capteur comprenant un prisme (42) et un substrat en verre (44), générer des résonances plasmoniques de surface sur des parties de détection d'une cellule échantillon et d'une cellule de référence qui sont fournies sur le foyer linéaire à une distance prédéterminée de façon à réduire l'intensité de la lumière réfléchie à partir des parties de détection, permettre aux faisceaux de la lumière réfléchie de réfléchir à partir de miroirs séparateurs de lumière (53A, 53B) possédant des angles différents avec les faisceaux en maintenant une distance égale à la distance prédéterminée entre les centres des parties de détection et en séparant ainsi la lumière réfléchie en deux trajets optiques (54, 55), et presser une cellule de capteur combiné de type électrode comprenant des films de détection correspondant à la partie échantillon et à la partie de référence sur un film d'interface optique adhésif fixé sur la surface supérieure du prisme, possédant un indice de réfraction apparié à celui du prisme, grâce à quoi un système optique exécutant une détection de la lumière réfléchie séparée en lesdits deux trajets optiques (54, 55) en deux zones d'un capteur CCD linéaire (56) unique mesure les résonances plasmoniques de surface générées dans la cellule échantillon et la cellule de référence, avec un appariement optique maintenu entre le capteur, le film d'interface optique adhésif et le prisme (42).

5. Le procédé de mesure différentielle par résonance plasmonique de surface selon la revendication 4, où le film d'interface optique adhésif est un film d'interface optique adhésif polymérique.

6. Le procédé de mesure différentielle par résonance plasmonique de surface selon la revendication 5, où le film polymérique contient du polychlorure de vinyle.

7. Le procédé de mesure différentielle par résonance plasmonique de surface selon la revendication 5 ou 6, où la cellule échantillon est disposée sur le film d'interface optique adhésif sans recourir à une huile correspondante possédant le même indice de réfraction que le prisme et le substrat en verre.

8. Le procédé de mesure différentielle par résonance plasmonique de surface selon la revendication 7, où une substance interactive avec un matériau fonctionnel et possédant un indice de réfraction qui est varié par l'interaction est mesurée dans un système de type capteur chimique.

9. Le procédé de mesure différentielle par résonance plasmonique de surface selon la revendication 8, où un anticorps est fixé à la cellule échantillon de sorte qu'une réaction antigène-anticorps est mesurée dans un système de type immunocapteur.

10. Le procédé de mesure différentielle par résonance plasmonique de surface selon la revendication 4, où la cellule de capteur combiné de type électrode est pressée à une force d'environ 20 N.

# FIG. 1

# FIG. 2

# FIG. 3

# FIG. 4

# FIG. 5

# FIG. 6

# FIG. 7

# FIG. 8

# FIG. 9

# FIG. 10

# FIG. 11

(a)

(b)

# F I G. 12

(a)

(b)

# F I G. 13

# F I G. 14

# FIG. 15

```
                                    ─126
                                    ─125
                                    ─124
                                    ─123
                                    ─122

                                    ─121
```

# FIG. 16

PVC: POLYVINYL CHLORIDE (POWDER)
_____

        THF: DISSOLVED IN TETRAHYDROFURAN

PVC SOLUTION
_____

        DOP:2-ETHYLHEXYL PHTHALATE

        TCP:TRITOLYL PHOSPHATE

| DRYING |

ADHESIVE OPTICAL INTERFACE PVC FILM
_____

# F I G. 17

(a)

(b)

SPR INTENSITY

RESONANCE
ANGLE

# F I G. 18

(a)

(b)

FIG. 19

# F I G. 20

# F I G. 21

$y = -7.8112e\text{-}2 + 7.1743e\text{-}2x \quad R^2 = 0.973$

DIFFERENCE IN
RESONANCE ANGLE
$(\times 10^{-3})$

2,4-DICHLOROPHENOL CONCENTRATION (ppm)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000039401 A
- JP 2001183292 A
- JP 2001255267 A
- JP 3356212 B
- JP 2003185572 A
- US 5917607 A
- WO 0186262 A